# EUROPÄISCHE PATENTANMELDUNG

(11) **EP 2 208 803 A1**
(43) Veröffentlichungstag der Anmeldung: **21.07.2010**
(21) Anmeldenummer: 09150110.6
(22) Anmeldetag: 06.01.2009
(51) Int. Cl.: C22C 38/04, C22C 38/12, C21D 9/48

(54) **Höherfester, kaltumformbarer Stahl, Stahlflachprodukt, Verfahren zur Herstellung eines Stahlflachprodukts sowie Verwendung eines Stahlflachproduktes**

(71) Anmelder: ThyssenKrupp Steel Europe AG, 47166 Duisburg (DE)
(72) Erfinder: Becker, Jens-Ulrik, Dr., 47058, Duisburg (DE); Hofmann, Harald, Dr., 44357, Dortmund (DE); Schirmer, Matthias, 40235, Düsseldorf (DE)
(74) Vertreter: Cohausz & Florack

(57) **Zusammenfassung**

Die Erfindung betrifft einen höherfesten, kaltumformbaren Stahl und daraus hergestellte Stahlflachprodukte, bei denen eine optimale Kombination aus Festigkeit, Warm-- und Kaltverformbarkeit und Schweißbarkeit sowie eine geringe Neigung zur verzögerten Bildung von Rissen gesichert ist. Diese Eigenschaftskombination wird erfindungsgemäß dadurch erreicht, dass der Stahl (in Gew.-%) 0,1 - 1,0 % C, 10 - 30 % Mn, jeweils > 0,60 - < 1,8 % Al und Si, wobei die Summe der Gehalte an Al und Si ≤ 2,5 % beträgt, mindestens ein Element aus der Gruppe "V, Nb", wobei die Summe der Gehalte an diesen Mikrolegierungselementen 0,05 - 0,5 % beträgt, < 0,5 % Ti, < 0,03 % S, < 0,08 % P, < 0,1 % N, < 2 % Mo, < 8 % Cr, < 0,01 % B, < 8 % Ni, < 5 % Cu als Rest Fe und unvermeidbare, herstellungsbedingte Verunreinigungen enthält. Darüber hinaus betrifft die Erfindung ein Verfahren zur Herstellung erfindungsgemäßer Stahlflachprodukte.

**Die Zusammenfassung soll ohne Figur veröffentlicht werden.**

## Beschreibung

Die Erfindung betrifft einen höherfesten, kaltumformbaren Stahl mit hohem Mangan-Gehalt, der eine gute Resistenz gegen eine durch Wasserstoff induzierte verzögerte Rissbildung und eine gute Schweißbarkeit besitzt. Darüber hinaus betrifft die Erfindung aus einem solchen Stahl hergestellte Stahlflachprodukte sowie ein Verfahren zur Herstellung und eine bevorzugte Verwendung solcher Stahlflachprodukte.

Die Wasserstoff-induzierte "verzögerte Rissbildung" wird durch von außen in den Stahlwerkstoff eindringenden Wasserstoff verursacht. Dagegen spricht man von einer "Delayed Fracture", wenn das Versagen des Stahlwerkstoffs durch im Material erzeugungsbedingt vorliegenden Wasserstoff verursacht wird.

Die eingangs genannte Eigenschaftskombination wird insbesondere von Stählen gefordert, die für die Herstellung von Karosseriebauteilen für Kraftfahrzeuge verwendet werden. Gerade dort besteht die Forderung, dass die Bleche, aus denen die Bauteile gefertigt werden, bei einem optimal geringen Gewicht nicht nur gut verformbar sind, sondern auch eine ausreichende Festigkeit besitzen, um bei geringen Blechdicken einen effektiven Beitrag zur Stabilität der jeweiligen Karosserie zu leisten.

Darüber hinaus muss bei für Karosseriebauteile und vergleichbare Anwendungen bestimmten Stählen sichergestellt sein, dass sie gut schweißbar sind und insbesondere nicht zu einer durch die im Zuge des Schweißens auftretende Gefügeveränderung eintretenden Neigung zur Rissbildung im Bereich der jeweiligen Schweißstelle ("Lotrissigkeit")neigen.

Mit "Lotrissigkeit" ist eine Schwächung von Korngrenzen durch ein die Korngrenzen infiltrierendes Medium (z.B. Zink aus Beschichtung, Cu aus Schweißzusatzwerkstoff) bezeichnet, die aufgrund von Abkühlspannungen zu Rissen führen kann. So kann es beispielsweise beim Verschweißen von verzinkten Blechen dazu kommen, dass das als Korrosionsschutzbeschichtung auf das Stahlblechsubstrat aufgetragene Zink in Folge der hohen Schweißtemperaturen aufschmilzt und an Korngrenzen in das Stahlblech eindringt. Bei der anschließenden Abkühlung und damit einhergehenden Erstarrung des eingedrungen Zinks treten an diesen Korngrenzen Spannungen auf, die Risse verursachen können.

Schließlich dürfen für Karosseriebauteile eingesetzte Stähle trotz einer für die Formgebung des jeweiligen Bauteils gegebenenfalls erforderlichen mehrfachen Kaltumformung auch nach einer langen Einsatzdauer unter den im praktischen Einsatz auftretenden Lasten nicht zur Bildung von Wasserstoff-induzierten Rissen, der so genannten "verzögerten Rissbildung", neigen, die gefährliche Folgen für die Festigkeit und Stabilität des Bauteils und der mit ihm hergestellten Karosserie nach sich ziehen könnte.

Es ist eine große Zahl von Versuchen bekannt, für den Karosseriebau und vergleichbare Anwendungsgebiete Stähle zur Verfügung zu stellen, die ein minimiertes Gewicht, eine gute Verformbarkeit und mechanische Eigenschaften besitzen, die im Hinblick auf die beabsichtigte Verwendung optimiert sind.

Ein erstes Beispiel für einen solchen Leichtstahl ist aus der DE 197 27 759 C2 bekannt. Er enthält gemäß einer als bevorzugt angegebenen Ausgestaltung neben Fe (in Gew.-%) 10 - 30 % Mn, 2 - 4 Al und 2 - 4 % Si, insbesondere jeweils 3 % Si und Al sowie 25 % Mn. Der Stahl weist TWIP- und TRIP-Eigenschaften und eine Zugfestigkeit von bis zu 1100 MPa auf.

Ein aus der EP 1 067 203 A1 bekannter anderer Leichtstahl kann neben Eisen und unvermeidbaren Verunreinigungen bei Gehalten von (in Gew.-%) 0,001 - 1,6 % C, 6 - 30 % Mn, bis zu 10 % Cr, bis zu 10 % Ni, bis zu 5 % Cu, bis zu 6 % Al und bis zu 2,5 % Si aufweisen. Als Begleitelemente ohne besonderen Einfluss auf seine Eigenschaften können in diesem Stahl P, Sn, Sb und As vorhanden sein, wobei die Summe der Gehalte dieser Elemente nicht größer als 0,2 % sein soll. Zusätzlich können V, Ti, Nb, B, Zr und Seltene Erden dem Stahl zugegeben werden, wenn die Summe der Gehalte an diesen Elementen 3 % nicht überschreitet. In der EP 1 067 203 A1 ist allerdings nicht erwähnt, zu welchem Zweck diese Legierungselemente zugegeben werden.

Es hat sich gezeigt, dass sich Stähle der in der EP 1 067 203 A1 beschriebenen Art trotz der Anwesenheit von Kohlenstoff nur unter Schwierigkeiten warm- und kaltwalzen lassen. So zeigen sich an den Bandkanten häufig Instabilitäten oder Risse, welche die großtechnische Herstellung von Blechen aus solchen Stählen in der Praxis schwierig machen.

Ein weiterer Leichtbaustahl ist in der DE 199 00 199 A1 beschrieben. Dieser Stahl weist neben Kohlenstoff als optionales Legierungselement mehr als 7 % - 27 % Mn, mehr als 1 % % bis 10 % Al, mehr als 0,7 % % bis 4 % Si, weniger 0,5 % C, weniger 10 % Cr, weniger 10 % Ni und weniger 0,3 % Cu auf. Des Weiteren kann er N, V, Nb, Ti, P enthalten, wobei die Summe dieser Elemente 2 % nicht überschreiten darf. Erläuterungen, wie ein solcher Leichtbaustahl in der Praxis konkret legiert werden müsste, um einerseits gute mechanische Eigenschaften und andererseits eine gute Schweißeignung und geringe Neigung zur verzögerten Rissbildung zu haben, sind in der DE 199 00 199 A1 allerdings nicht gegeben. Auch fehlen in dieser Offenlegungsschrift Ausführungsbeispiele, aus denen auf eine zu einer solchen Eigenschaftskombination führende Legierung geschlossen werden könnte.

Aus der DE 101 28 544 C1 ist ein Stahlblech mit guter Kaltumformbarkeit und höherer Festigkeit aus einem Leichtstahl bekannt, der (in Gew.-%) bis zu 1,00 % C, 7,00 - 30,00 % Mn, 1,00 - 10,00 % Al, mehr als 2,50 - 8,00 % Si, wobei die Summe des Al- und Si-Gehalts mehr als 3,50 - 12,00 % beträgt, einen wirksamen, jedoch weniger als 0,01 % betragenden Gehalt an B, sowie wahlweise < 8,00 % Ni, < 3,00 % Cu, < 0,60 % N, < 0,30 % Nb, < 0,30 % Ti, < 0,30 % V, < 0,01 % P und als Rest Eisen und unvermeidbare Verunreinigungen enthält. Die Zugfestigkeit dieses bekannten Stahls liegt typischerweise bei mindestens 680 MPa, sein Produkt aus seiner Zugfestigkeit und seiner Dehnung bei mindestens 41000 MPa und seine Streckgrenze bei bis zu 520 MPa. Aufgrund dieser Eigenschaftskombination ist das bekannte Stahlblech insbesondere für die Herstellung von Bauteilen für Automobilkarosserien geeignet. Aufgrund seiner oberhalb von 2,50 Gew.-% liegenden Si-Gehalte sollen die bekannten Stahlbleche eine gegenüber solchen Leichtstahlblechen, die geringe Si-Gehalte besitzen, verbesserte Kaltwalzbarkeit aufweisen. Die hohe Zugabe von Si drückt sich in gleichmäßigeren Streckgrenzen- und Zugfestigkeitswerten sowie in höheren Bruchdehnungs- und Gleichmaßdehnungswerten aus. Gleichzeitig bewirken die hohen Si-Gehalte höhere r- und n-Werte sowie eine isotrope Ausbildung der mechanischen Eigenschaften. Weder das Problem einer Vermeidung des verzögerten Auftretens von Rissen nach einer Kaltumformung noch das Problem der Schweißbarkeit und einer mit dem Schweißen möglicherweise einhergehenden Rissbildung sind in der DE 101 28 544 C1 erörtert worden.

Erst in der EP 1 878 811 A1 ist zur Vermeidung des Phänomens der verzögerten Rissbildung vorgeschlagen worden, einen Stahl, der neben Eisen und unvermeidbaren Verunreinigungen (in Gew.-%) 0,35 - 1,05 % C, 15 - 26 % Mn, bis zu 0,030 S, bis zu 0,080 % P, 0,1 % N, sowie mindestens ein Legierungselement aus der Gruppe V, Ti, Nb, Mo und Cr mit der Maßgabe enthält, dass der Gehalt an V auf 0,05 - 0,5 %, der Gehalt an Ti auf 0,04 - 0,5 %, der Gehalt an Mo auf 0,14 - 2 % und der Gehalt an Cr auf 0,07 - 2 % beschränkt ist, mit Gehalten an Al und Si legieren, die für Al auf max. 0,050 % und für Si auf max. 3 % beschränkt sind. Optional kann der Stahl dabei noch 0,0005 - 0,010 % B, bis zu 2 % Ni und bis zu 5 % Cu enthalten. Als Ursache für die Vermeidung von verzögerten Rissen ist dabei die Anlagerung von Wasserstoff an den aus V, Ti, Nb, Mo und Cr in Verbindung mit Kohlenstoff oder Stickstoff gebildeten Carbid-, Nitrid- oder Carbonitrid-Ausscheidungen erkannt worden. Dementsprechend wird in der EP 1 878 811 A1 gefordert, die Menge an diesen Ausscheidungen jeweils auf bestimmte, eng begrenzte Bereiche zu beschränken. Al wird dabei allenfalls als Oxidationsmittel zugelassen, soll aber in möglichst geringen Mengen vorhanden sein, um die Bildung von AlN-Ausscheidungen zu vermeiden. Auch Si ist gemäß der EP 1 878 811 A1 lediglich zur Oxidation zuzugeben, da es die Dehnbarkeit des bekannten Stahls verschlechtern soll und zur Bildung von unerwünschten Oxiden neigt.

Aus der WO 2008/078940 ist ein weiterer hoch manganhaltiger, rein austenitischer Stahl bekannt, der in Folge guter Dehnungseigenschaften eine gute Verarbeitbarkeit und in Folge einer hohen Dehngrenze ein gutes Energieaufnahmevermögen besitzen soll. Dazu enthält der bekannte Stahl neben Eisen und unvermeidbaren Verunreinigungen (in Gew.-%) 0,2 - 1,5 % C, 10 - 25 % Mn, 0,01 - 3,0% Al, bis zu 0,03% P, bis zu 0,03 % S, bis zu 0,040 % N. Zusätzlich ist in diesem bekannten Stahl mindestens ein Element enthalten, das aus einer 0,02 - 2,5 % Si, 0,01 - 0,10 % Ti und 0,01 - 0,10 % Nb umfassenden Gruppe von Elementen ausgewählt ist. Si, Ti und Nb haben gemäß der WO 2008/078940 jeweils einen positiven Effekt auf die Feinkörnigkeit des Gefüges. Si soll durch Bildung einer dünnen Oberflächenschicht zusätzlich die Oxidation des im Stahl in großen Mengen vorhandenen Mangans behindern. Hohe Si-Gehalte werden dabei allerdings als problematisch angesehen, weil diese ein Beschichten des Stahls mit einem für eine ausreichende Korrosionsbeständigkeit erforderlichen metallischen Überzug erschweren. Nb soll durch Bildung von Nb-Ausscheidungen zusätzlich die Härte des bekannten Stahls verbessern. Al ist in diesem bekannten Stahl enthalten, um die Zähigkeit des bekannten Stahls zu verbessern. Allzu hohe Al-Gehalte sollen allerdings vermieden werden, um eine gute Vergießbarkeit zu sichern und die Gefahr von Oxidbildung während des Warmwalzens zu vermeiden. Die in der WO 2008/078940_angegebenen Ausführungsbeispiele bestätigen, dass gemäß dieser Veröffentlichung nur bis zu 0,65 Gew.-% betragende Si-Gehalte und unterhalb von 0,5 Gew.-% liegende Gehalte an Nb vorgesehen worden sind, um die erwarteten negativen Effekte dieser Legierungselemente auszuschließen. Besonders geringe Gehalte an Nb und Si sind dabei dann vorgesehen worden, wenn diese Elemente kombiniert zugegeben worden sind. Auf das Problem der verzögerten Bildung von Rissen bei gleichzeitig guter Schweißbarkeit und im Übrigen optimierten mechanischen Eigenschaften ist in der WO 2008/078940 ebenfalls nicht eingegangen worden. Vor diesem Hintergrund lag der Erfindung die Aufgabe zu Grunde, einen Stahl anzugeben und daraus hergestellte Stahlflachprodukte, bei denen eine optimale Kombination aus Festigkeit, Warm- und Kaltverformbarkeit und Schweißbarkeit sowie eine geringe Neigung zur verzögerten Bildung von Rissen gesichert ist. Darüber hinaus sollten ein Verfahren zur Herstellung und eine vorteilhafte Verwendung von solchen Stahlflachprodukten genannt werden.

In Bezug auf den Stahl ist diese Aufgabe erfindungsgemäß durch einen gemäß Anspruch 1 zusammengesetzten Stahl gelöst worden. Vorteilhafte Ausgestaltungen des erfindungsgemäßen Stahls sind in den auf Anspruch 1 rückbezogenen Ansprüchen angegeben.

In Bezug auf das Stahlflachprodukt besteht die erfindungsgemäße Lösung der oben genannten Aufgabe in der Lehre von Anspruch 7. Vorteilhafte Ausgestaltungen erfindungsgemäßer Stahlflachprodukte sind in den auf Anspruch 7 rückbezogenen Ansprüchen angegeben.

In Bezug auf das Verfahren ist die oben genannte Aufgabe erfindungsgemäß dadurch gelöst worden, dass bei der Verarbeitung erfindungsgemäßen Stahls mindestens die in Anspruch 11 angegebenen Arbeitsschritte absolviert werden. Vorteilhafte Ausgestaltungen des erfindungsgemäßen Verfahrens sind in den auf Anspruch 11 rückbezogenen Ansprüchen angegeben.

Schließlich besteht die erfindungsgemäße Lösung der oben genannten Aufgabe in Bezug auf die Verwendung darin, dass die erfindungsgemäßen Stahlbleche zu dem im Anspruch 16 angegebenen Zweck eingesetzt werden.

Ein erfindungsgemäßer Stahl enthält demnach (in Gew.-%) ≥ 0,1 % und ≤ 1,0 % C, ≥ 10 % und ≤ 30 % Mn, > 0,6 - < 1,8 % Al, > 0,6 - < 1,8 % Si, wobei die Summe der Gehalte an Al und Si ≤ 2,5 % beträgt, mindestens ein Mikrolegierungselement aus der Gruppe "Vanadium, Niob", wobei die Summe der Gehalte an diesen Mikrolegierungselementen 0,05 - 0,5 % beträgt, < 0,5 % Ti, < 0,03 % S, < 0,08 % P, < 0,1 % N, < 2 % Mo, < 8 % Cr, < 0,01 % B, < 8 % Ni, < 5 % Cu und als Rest Eisen und unvermeidbare, herstellungsbedingte Verunreinigungen.

Erfindungsgemäßer Stahl und dementsprechend auch aus erfindungsgemäßem Stahl gefertigte Flachprodukte, wie Stahlbleche oder -bänder, weisen ein rein austenitisches Gefüge auf und können TWIP- und TRIP-Eigenschaften besitzen.

Zur Stabilisierung des Austenitgefüges des erfindungsgemäßen Stahls trägt sein C-Gehalt von mindestens 0,1 Gew.-%, insbesondere mindestens 0,35 Gew.-% bei. Auch können über den jeweiligen C-Gehalt des Stahls dessen TWIP- und TRIP-Eigenschaften gezielt beeinflusst werden. Des Weiteren wird durch die erfindungsgemäße Anwesenheit von C die Bildung intermetallischer Phasen unterdrückt und die Festigkeit erhöht, ohne dass es zu einem Verlust von Duktilität kommt. Bei C-Gehalten von mehr als 1 Gew.-% kann es jedoch zu einer Abnahme der Verformbarkeit des erfindungsgemäßen Stahls kommen. Daher ist sein C-Gehalt auf 0,1 - 1 Gew.-% beschränkt. Die angestrebte Wirkung des Kohlenstoffgehalts lässt sich in erfindungsgemäßem Stahl dann besonders sicher erzielen, wenn seine C-Gehalte auf einen Bereich von 0,1 - 0,6 Gew.-% beschränkt sind.

Mangan bewirkt in erfindungsgemäßem Stahl in an sich bekannter Weise die geforderte hohe Festigkeit und eine verbesserte Stapelfehlerenergie. Über die Gehalte an Mn lassen sich dementsprechend die TRIP- oder TWIP-Eigenschaften des erfindungsgemäßen Stahls einstellen.

Darüber hinaus stellt die Anwesenheit hoher Gehalte an Mn sicher, dass der erfindungsgemäße Stahl das angestrebte austenitische Gefüge aufweist. Indem der Mn-Gehalt mindestens 15 Gew.-% beträgt, wird diese Wirkung besonders sicher erreicht. Bei über 30 Gew.-% liegenden Mn-Gehalten tritt keine im Hinblick auf die hier interessierenden Eigenschaften wesentliche Verbesserung mehr ein. Stattdessen besteht die Gefahr, dass bei höheren Mangan-Gehalten die maximale Zugfestigkeit zurückgeht.

Geringere Mn-Gehalte erweisen sich in Bezug auf die Anfälligkeit gegenüber der verzögerten Rissbildung in Kombination mit den erfindungsgemäß vorgegebenen Al- und Si-Gehalten als besonders vorteilhaft. So führt beispielsweise ein Mn-Gehalt von weniger als 23 Gew.-%, insbesondere bis zu 22 Gew.-%, zu einer deutlichen Absenkung des Korrosionspotenzials und wirkt der Wasserstoffaufnahme entgegen. Nach unten sind der Absenkung des Mn-Gehalts durch eine damit einhergehende Verschlechterung der Herstellbarkeit des Stahls und seiner Verarbeitbarkeit Grenzen gesetzt. Deshalb ist in einem erfindungsgemäßen Stahl der Mn-Gehalt auf einen Bereich von 10 - 30 Gew.-%, insbesondere 15 - 26 Gew.-%, beschränkt, wobei sich in einem Mn-Gehaltsbereich von bis zu 23 Gew.-% die erfindungsgemäß genutzten Effekte besonders sicher einstellen.

Unterstützt werden die Korrosionsunempfindlichkeit und die damit einhergehende Verminderung der Gefahr von verzögerter Rissbildung bei einem erfindungsgemäßen Stahl durch die Anwesenheit von Aluminium und Silizium in den erfindungsgemäß für diese Elemente jeweils vorgegebenen Gehalten von in Summe mindestens 1,2 Gew.-%. Dabei nutzt auch die Erfindung den Effekt, dass Al und Si an der Oberfläche eines erfindungsgemäß zusammengesetzten Stahls eine dünne passivierende Schicht bilden, durch die die Korrosion behindert wird. Auf diese Weise wird die Gefahr von Rissbildung deutlich gegenüber dem im Stand der Technik zur Verfügung stehenden hochmanganhaltigen Stählen reduziert, bei denen zur Vermeidung von Ausscheidungen die Al- und Si-Gehalte auf ein Minimum reduziert sind.

Gleichzeitig ist dadurch, dass erfindungsgemäß die Summe der Gehalte an Aluminium und Silizium auf höchstens 2,5 Gew.-% beschränkt ist, eine Schweißbarkeit des erfindungsgemäßen Stahls gewährleistet, die der von hochmanganhaltigen Stählen mit höheren Al- und Si-Gehalten überlegen ist. Dabei sind die Gehalte an Al und Si so beschränkt, dass der bei hohen Gehalten an Al und Si andernfalls bestehenden Gefahr zu kleiner Arbeitsbereiche beim Schweißen begegnet ist. Die durch die erfindungsgemäße Anwesenheit von Si und Al in Kombination erzielten Effekte lassen sich dann besonders sicher nutzen, wenn die Summe der Al- und Si-Gehalte 1,8 - 2,5 Gew.-% beträgt.

Erfindungsgemäßer Stahl enthält mindestens eines der Mikrolegierungselemente Vanadium und Niob, wodurch die Voraussetzungen für eine optimale Feinkörnigkeit des Gefüges von aus erfindungsgemäßem Stahl gefertigten Stahlflachprodukten (Blech, Band) geschaffen sind. V und Nb erlauben die Erzeugung eines superfeinkristallinen Gefüges mit einer hohen Dichte an V- bzw. Nb-Ausscheidungen (VC, VN, VCN, NbC, NbN, NbCN, VNbC, VNbN, VNbCN) und einem großen Widerstand gegen Lotrissbildung. Die Größe der bei einem erfindungsgemäßen Stahl auf diesem Wege erhaltenen Körner ist dabei deutlich feiner als bei den derzeit auf dem Markt befindlichen austenitischen hochmanganhaltigen Stählen. So kann für ein aus erfindungsgemäßem Stahl kaltgewalztes Stahlflachprodukt (Blech, Band) eine Gefügefeinheit garantiert werden, die mindestens ASTM 12 entspricht, in der Regel feiner als ASTM 12 ist bzw. ASTM 14 und feiner erreicht. Dabei konnte anhand von praktischen Versuchen gezeigt werden, dass die Feinkörnigkeit eines erfindungsgemäßen Stahlflachproduktes regelmäßig mindestens ASTM 14 entspricht, wobei in der überwiegenden Zahl der Fälle ein noch feineres Gefüge erhalten wird, das die Anforderung der ASTM 15 erfüllt. Erfindungsgemäßer Stahl lässt sich jedoch nicht nur im kaltgewalzten Zustand weiterverarbeiten, sondern eignet sich auch für eine Weiterverarbeitung als warmgewalztes Stahlflachprodukt. Da die Dicke solcher Warmwalzprodukte (Blech, Band) in der Regel größer ist als die von kaltgewalzten Stahlflachprodukten, schwächen Lotrisse, die im Bereich von Schweißstellen auftreten können, warmgewalzte Stahlflachprodukte weniger stark als am Kaltband. Entscheidend ist dabei das Verhältnis Risslänge zu Materialstärke. Deshalb ist es in vielen Fällen ausreichend, wenn bei einem warmgewalzten, ohne zusätzliches Kaltwalzen der Weiterverarbeitung zu einem Bauteil zugeführten erfindungsgemäßen Stahlflachprodukt das Korn nicht so fein ist wie bei einem kaltgewalzten erfindungsgemäßen Blech oder Band. Die für erfindungsgemäße Warmwalzprodukte ausreichende Korngröße ist daher mit ASTM 10 oder feiner vorgegeben, wobei sich selbstverständlich ein feineres, ASTM 12 oder mehr entsprechendes Gefüge auch in diesem Fall positiv auf die Gefahr der Entstehung verzögerter Risse auswirkt.

Das durch die erfindungsgemäße Legierung erzielte besonders feine Gefüge ergibt die angestrebte optimale Kombination aus Festigkeit, Warm- und Kaltverformbarkeit und Schweißbarkeit sowie geringer Neigung zur verzögerten Bildung von Rissen. Das gilt in gleichem Maße für aus erfindungsgemäßem Stahl erzeugtes Warm- und Kaltband.

Die positiven Effekte von Nb und V auf die Feinkörnigkeit des Gefüges eines erfindungsgemäß zusammengesetzten Stahls können genutzt werden, wenn Vanadium oder Niob jeweils alleine oder in Kombination miteinander im erfindungsgemäßen Stahl vorhanden sind.

Eine erste Variante des erfindungsgemäßen Stahls enthält dementsprechend mindestens 0,05 Gew.-% bis 0,5 Gew.-% Niob und allenfalls den Verunreinigungen zuzurechnende und somit legierungstechnisch unwirksame Spuren an Vanadium.

Eine zweite Variante der erfindungsgemäßen Legierung weist dagegen Gehalte an Nb auf, die allenfalls im Bereich der Verunreinigungen liegen, während die erfindungsgemäß vorgesehene Feinkörnigkeit des Gefüges durch mindestens 0,05 Gew.-% und höchstens 0,5 Gew.-% betragende Gehalte an Vanadium sichergestellt wird.

Bei einer dritten Variante der Erfindung sind Vanadium und Niob in Kombination im erfindungsgemäßen Stahl vorhanden, wobei die Gehalte an diesen Elementen in Summe jeweils mindestens 0,05 Gew.-% betragen, jedoch 0,5 Gew.-% nicht überschreiten.

Besonders sicher treten die durch die Anwesenheit von Nb und/oder V erfindungsgemäß erzielten Effekte dann ein, wenn die Summe der Gehalte an Nb und V in einem erfindungsgemäß legierten Stahl 0,1 - 0,3 Gew.-% beträgt, insbesondere über 0,1 Gew.-% liegt.

Titan bildet als Mikrolegierungselement in erfindungsgemäßem Stahl ebenfalls Ausscheidungen, die zur Feinkörnigkeit beitragen und die mechanischen Eigenschaften des Stahls positiv beeinflussen können. Allerdings ist Titan in Bezug auf die Einstellung eines feinkörnigen Gefüges weniger wirksam als die erfindungsgemäß für diesen Zweck zugegebenen Legierungselemente Niob oder Vanadium. Eine die Wirkung dieser Elemente optimal unterstützende Wirkung von Titan in erfindungsgemäßem Stahl ergibt sich bei Ti-Gehalten von mindestens 0,3 Gew.-%. Bei zu hohen Gehalten an Ti können sich TiC-Partikel bilden, von denen beim Kaltwalzen und Kaltumformen von aus erfindungsgemäßem Stahl gefertigten Flachprodukten Risse ausgehen können. Darüber hinaus können die TiC-Partikel beim Kaltwalzen und Kaltumformen zerstört werden. Dabei entstehen zwischen den zerstörten Partikeln Kavitäten, die wiederum als Startpunkt für Risse dienen können. Schließlich können oberflächennahe, grobe TiC-Partikel beim Kaltwalzen und Kaltumformen zu Fehlstellen an der Oberfläche führen. Daher sieht die Erfindung vor, den Ti-Gehalt, sofern überhaupt vorhanden, unterhalb einer Obergrenze von 0,5 Gew.-% zu halten.

Die in erfindungsgemäßem Stahl gegebenenfalls vorhandenen Nb- und Ti-Gehalte führen schon beim Warmwalzen zu Nb-und Ti-Ausscheidungen und erhöhen so den Walzwiderstand beim Warm- und Kaltwalzen. Dies kann sich insbesondere beim Warmwalzen als ungünstig erweisen, da bereits die erfindungsgemäß vorgeschriebenen vergleichbar hohen Al-und Si-Gehalte einen erhöhten Warmwalzwiderstand nach sich ziehen. Demgegenüber entstehen die feinen Vanadium-Ausscheidungen erst bei der Schlussglühung des fertig gewalzten Blechs und behindern daher das Warm- und Kaltwalzen nicht. In Fällen, in denen es sich als schwierig erweist, erfindungsgemäßen Stahl warm- oder kaltzuwalzen, kann es auch aus diesem Grund günstig sein, den Vanadium-Gehalt des Stahls in Relation zum Nb-Gehalt zu erhöhen bzw. zu Gunsten eines hohen Vanadium-Gehalts auf die Zugabe von Niob und/oder Titan zu verzichten.

Nb, V und Ti haben alle einen Einfluss auf die verzögerte Rissbildung. Wie an sich bekannt, bilden diese drei Elemente Ausscheidungen, an denen der Wasserstoff "getrappt" (d.h. festgehalten) und unschädlich gemacht wird.

Erst durch die erfindungsgemäße Zugabe von Nb und/oder V kann jedoch bei einem hoch-manganhaltigen Stahl ein sehr feinkörniges Gefüge (ASTM 12, insbesondere ASTM 14 und feiner) sicher erreicht werden.

Schwefel und Phosphor gelangen im Zuge des Erschmelzungsprozesses unvermeidbar in den erfindungsgemäßen Stahl, können jedoch zu einer Versprödung an den Korngrenzen führen. Insbesondere im Hinblick auf eine ausreichende Warmverformbarkeit ist daher bei erfindungsgemäßem Stahl der S-Gehalt auf weniger als 0,03 Gew.-% und der P-Gehalt auf weniger als 0,08 Gew.-% beschränkt.

Stickstoff ist zur Bildung von Karbonitriden notwendig. Bei N-Mangel bilden sich C-reiche und N-arme Karbonitride. Der N-Gehalt sollte dennoch gering eingestellt werden. Al und N bilden Ausscheidungen, die die mechanischen Eigenschaften, insbesondere die Dehnwerte, deutlich verschlechtern können. Auch durch eine nachträgliche Wärmebehandlung können die AlN - Ausscheidungen nicht mehr aufgelöst werden. Aus diesem Grund ist der maximale Gehalt an Stickstoff in erfindungsgemäßem Stahl auf weniger als 0,1 Gew.-% beschränkt, wobei sich eine optimale Wirkung des Stickstoffs in erfindungsgemäßem Stahl einstellt, wenn dessen N-Gehalt auf 0,0030 - 0,0080 Gew.-% beschränkt ist.

Mo in Gehalten unterhalb von 2 Gew.-% und Cr in Gehalten unterhalb von 8 Gew.-%, vorzugsweise von weniger als 4 Gew.-%, tragen ebenfalls zur Verbesserung der Korrosionsbeständigkeit und damit einhergehend zu einer weiteren Verminderung des Risikos der verzögerten Rissbildung bei. So bilden Mo und Cr mit dem im Stahl vorhandenen Kohlenstoff und Stickstoff Ausscheidungen, die durch die Anlagerung von Wasserstoff der verzögerten Rissbildung entgegenwirken.

Bor substituiert in seiner Wirkung auf die mechanischtechnologischen Eigenschaften das Legierungselement Mn. So ist festgestellt worden, dass ein Stahl mit einem Mn-Gehalt von 20 Gew.-% und 0,003 % Bor ein ähnliches Eigenschaftsprofil aufweist wie ein Stahl, der 25 % Mn, jedoch kein B enthält. Daher erlaubt die Zugabe von bis zu 0,01 Gew.-% Bor zu einer erfindungsgemäßen Stahllegierung bei unverändert hohen Festigkeiten verminderte Mn-Gehalte, die im Hinblick auf die Vermeidung von verzögerter Rissbildung und Lotrissigkeit günstig sind.

Ni kann einem erfindungsgemäßen Stahl optional zugegeben werden, um seine Festigkeit durch Mischkristall- und Ausscheidungshärtung weiter zu steigern. Nickel trägt darüber hinaus zu einer hohen Bruchdehnung bei und steigert die Zähigkeit des Stahls. Bei erfindungsgemäßen Stählen ist dieser Effekt jedoch erschöpft, wenn der Stahl mehr als 8 Gew.-% Nickel enthält. Daher ist die Obergrenze der erfindungsgemäß optional zugegebenen Nickel-Gehalte auf 8 Gew.-% beschränkt.

Auch durch die Zugabe von Kupfer in unterhalb von 5 Gew.-% liegenden Gehalten kann die Härte eines erfindungsgemäßen Stahls durch die Bildung von Ausscheidungen gesteigert werden. Über 5 Gew.-% hinausgehende Gehalte an Cu können jedoch Oberflächenfehler verursachen, die beispielsweise aus erfindungsgemäßem Stahl gefertigte Flachprodukte (Band, Blech) unbrauchbar machen können.

Im Ergebnis steht mit der Erfindung somit ein Stahl zur Verfügung, der nicht nur eine hohe Festigkeit von mindestens 800 MPa und mehr besitzt, sondern bei dem auch ein großer Widerstand gegen verzögerte Rissbildung mit einem hohen Widerstand gegen "Lotrissigkeit" kombiniert sind.

Erfindungsgemäßer Stahl eignet sich hervorragend zur Verarbeitung zu Stahlflachprodukten, wie Stahlblechen oder Stahlbändern, die anschließend einer Warm- oder Kaltverformung zu Bauteilen unterzogen werden sollen.

Um die erfindungsgemäßen Stahlflachprodukte vor Korrosion zu schützen, können diese mindestens auf ihrer im praktischen Einsatz einem korrosiven Angriff ausgesetzten Fläche mit einer metallischen Schutzbeschichtung überzogen sein. Bei dieser Schutzbeschichtung kann es sich in an sich bekannter Weise um eine Al- oder Znbasierte Schicht handeln, die beispielsweise durch elektrolytisches Verzinken, Feueraluminieren oder Feuerverzinken auf das erfindungsgemäße Flachprodukt aufgebracht wird, wobei sich insbesondere durch das elektrolytische Verzinken gute Beschichtungsergebnisse erzielen lassen.

Ein zur Herstellung von erfindungsgemäßen Stahlflachprodukten geeignetes Verfahren umfasst gemäß der Erfindung die Arbeitsschritte:
- Aus einem erfindungsgemäß beschaffenen Stahl wird ein Vormaterial in Form von Brammen oder Dünnbrammen gegossen.
- Ist insbesondere bei der Verwendung von Brammen eine Wiedererwärmung vor dem nachfolgend durchgeführten Warmwalzen erforderlich, so sollte die Wiedererwärmungstemperatur nicht unter 1100 °C liegen, insbesondere mehr als 1150 °C betragen. In solchen Fällen, in denen das Vormaterial in einem kontinuierlichen Arbeitsablauf nach dem Gießen direkt dem Warmwalzen zugeführt werden kann (z. B. in einer Gießwalzanlage, in der Dünnbrammen in kontinuierlich aufeinanderfolgenden Arbeitsschritten gegossen und zu Warmband verarbeitet werden), kann dies auch ohne zwischengeschaltete Wiedererwärmung im Direkteinsatz unter Ausnutzung der Gießhitze erfolgen.
- Nach dem erforderlichenfalls durchgeführten Erwärmen wird das Vormaterial bei einer mindestens 800 °C betragenden Warmwalzendtemperatur zu einem Warmband warmgewalzt.
- Danach wird das erhaltene Warmband bei einer maximal 700 °C betragenden Haspeltemperatur zu einem Coil gewickelt.

Indem das Warmwalzen bei einer mindestens 800 °C betragenden Temperatur beendet wird und bei vergleichbar niedrigen Temperaturen gehaspelt wird, wird die positive Wirkung des in erfindungsgemäßem Stahl vorhandenen Kohlenstoffs und, sofern es anwesend ist, insbesondere des Bors im vollen Umfang genutzt. So bewirken Bor und Kohlenstoff bei in diesem Bereich warmgewalzten Blechen höhere Zugfestigkeits- und Streckgrenzen-Werte bei nach wie vor akzeptablen Bruchdehnungswerten. Mit zunehmender Warmwalzendtemperatur nehmen Zugfestigkeit und Streckgrenze ab, während die Dehnungswerte ansteigen. Durch Variation der Walzendtemperaturen im durch die Erfindung vorgegebenen Rahmen lassen sich so die gewünschten Eigenschaften des erhaltenen Warmstahlflachproduktes gezielt und auf einfache Weise beeinflussen.

Besonders günstige mechanische Eigenschaften, insbesondere hohe Streckgrenzen, ergeben sich dabei dann, wenn besonders niedrige, insbesondere bis zur Raumtemperatur (ca. 20 °C) reichende Haspeltemperaturen eingestellt werden. Durch die Beschränkung der Haspeltemperatur auf Werte von maximal 700 °C, inbesondere weniger als 700 °C, insbesondere weniger als 500 °C oder Raumtemperatur wird in an sich bekannter Weise das Risiko einer Korngrenzoxidation minimiert. Korngrenzoxidation kann Materialabplatzungen nach sich ziehen und als solche die Weiterverarbeitung erschweren oder sogar unmöglich machen.

Das nach dem Haspeln erhaltene Warmband kann unmittelbar zu einem Bauteil kalt- oder warmverformt werden.

Jedoch eignet sich erfindungsgemäßes Warmband insbesondere auch zur Weiterverarbeitung zu Kaltband. Dazu lässt sich das Warmband nach dem Haspeln und einer erforderlichenfalls durchgeführten Oberflächenreinigung durch Beizen in an sich bekannter Weise zu Kaltband kaltwalzen. Bevorzugt liegt der bei einem solchen Kaltwalzen erzielte Kaltwalzgrad im Bereich von 30 % bis 75 %, um die optimierten Verformungs- und Festigkeitseigenschaften des fertigen erfindungsgemäßen Stahlflachprodukts sicher zu erreichen.

An das Kaltwalzen kann sich eine Schlussglühung anschließen, deren Glühtemperaturen bevorzugt maximal 800 °C betragen, insbesondere unter 800 °C liegen. Durch die Wahl der Glühtemperatur wird die Bildung eines besonders feinen Gefüge gesichert, dessen Feinkörnigkeit regelmäßig mindestens ASTM 12 und feiner entspricht. Nach der Schlussglühung weist das erhaltene Band die angestrebte Feinkörnigkeit des Gefüges dementsprechend sicher auf. Die Schlussglühung kann dabei im Durchlauf in einem Durchlaufglühofen durchgeführt werden.

Nach dem Kaltwalzen und dem Schlussglühen kann das erhaltene Kaltband noch einem Dressierwalzen unterzogen werden, um seine Maßhaltigkeit und seine mechanischen Eigenschaften weiter zu verbessern.

Wie bereits erwähnt, kann das als Warm- oder Kaltband für die Weiterverformung zu einem Bauteil bereitgestellte, erfindungsgemäße Stahlflachprodukt zum Schutz vor Korrosion mit einer metallischen Schutzschicht versehen werden. Dazu können im Fall, dass das Stahlflachprodukt als Warmband unmittelbar zu einem Bauteil verformt wird, das jeweils erhaltene Warmband oder das nach einem Kaltwalzen des Warmbands erhaltene Kaltband beispielsweise feueraluminiert, feuerverzinkt oder elektrolytisch verzinkt werden.

Zuvor wird erforderlichenfalls eine Reinigung und Vorbereitung der Bandoberfläche durch Beizen durchgeführt.

Soll das Stahlflachprodukt im blanken Zustand ausgeliefert werden, kann es an Stelle einer metallischen Beschichtung zum temporären Schutz vor Korrosion eingeölt werden.

Erfindungsgemäß hergestellte Stahlflachprodukte zeichnen sich allgemein durch ein besonders hohes Energieabsorptionsvermögen bei plötzlich auftretender Belastung aus.

Aufgrund ihres besonderen Eigenschaftsspektrums sind in erfindungsgemäßer Weise erzeugte Stahlflachprodukte besonders gut für die Herstellung von Karosseriebauteilen geeignet. Aufgrund seiner außergewöhnlich hohen Festigkeit und Dehnbarkeit ist erfindungsgemäß zusammengesetztes und erzeugtes Material besonders für tragende und crash-relevante Bauteile von Fahrzeugkarosserien geeignet. So lassen sich aus erfindungsgemäßen Stahlflachprodukten Strukturbauteile herstellen, bei denen eine hohe Tragfähigkeit mit einem hohen Schutz und einem geringen Gewicht kombiniert sind.

Wegen ihres hohen Energieaufnahmevermögens eignen sich erfindungsgemäße Stahlflachprodukte auch für die Herstellung von Panzerungen. Insbesondere lassen sich aus erfindungsgemäßen Stahlflachprodukten direkt am Körper getragene Elemente herstellen, die zum Schutz gegen Beschuss oder vergleichbare impulsförmig auftretende Angriffe dienen.

Aufgrund ihres geringen Gewichts bei gleichzeitig guter Verformbarkeit und Festigkeit sind erfindungsgemäße Stahlflachprodukte darüber hinaus besonders zur Verarbeitung zu Rädern für Fahrzeuge, insbesondere Kraftfahrzeuge, geeignet.

Auch lassen sich aus erfindungsgemäß beschaffenen Stahlflachprodukten Bauteile erzeugen, die im Bereich der Tieftemperaturtechnik eingesetzt werden. Das günstige Eigenschaftsspektrum erfindungsgemäß erzeugter Kaltbandprodukte bleibt auch bei niedrigen, im Bereich der Kryotechnik üblichen Temperaturen erhalten.

Denkbar ist darüber hinaus eine Verwendung erfindungsgemäßer Stahlbleche zur Herstellung von Rohren, die insbesondere für die Herstellung von hochfesten Motorteilen, wie Nockenwellen oder Kolbenstangen, bestimmt sind.

Nachfolgend wird die Erfindung anhand von Ausführungsbeispielen näher erläutert. Es zeigen:
- Fig. 1: ein Diagramm, in dem für aus verschiedenen hochmanganhaltigen Stählen gefertigten Stahlblechen gezogene Näpfchen die Näpfchenhaltezeit bis zum ersten Riss in Abhängigkeit von der Summe der Al- und Si-Gehalte aufgetragen ist;
- Fig. 2: ein Diagramm, in dem für aus verschiedenen hochmanganhaltigen Stählen gefertigte Stahlbleche der Arbeitsbereich beim Widerstandspunktschweißen über die Summe der Al- und Si-Gehalte aufgetragen ist;
- Fig. 3: ein Diagramm, in dem die Risslänge in der Fügeebene einer Schweißverbindung über die Summe der Al- und Si-Gehalte aufgetragen ist;
- Fig. 4: eine Abbildung einer lotrissfreien Widerstandspunktschweißung zwischen einem aus erfindungsgemäßem Stahl erzeugten oberen Stahlblech und einem darunter liegenden Stahlblech, das aus einem konventionell niedrig legiertem Stahlblech hergestellt ist;
- Fig. 4a: eine schematische Darstellung der in Fig. 4 abgebildeten Schweißverbindung;
- Fig. 5: eine Abbildung einer Widerstandspunktschweißung zwischen einem aus nicht erfindungsgemäßem Stahl erzeugten oberen Stahlblechen einem darunter liegenden Stahlblech, das aus einem konventionell niedrig legiertem Stahlblech hergestellt ist, bei der ein Lotriss entstanden ist;
- Fig. 6: einen Schnitt durch ein erfindungsgemäßes Stahlblech S über eine Dicke D in schematischer Darstellung;
- Fig. 7: einen Schnitt durch ein konventionelles Stahlblech K über dieselbe Dicke D wie in Fig. 6, ebenfalls in schematischer Darstellung.

Zum Nachweis der Eigenschaften erfindungsgemäßen Stahls sind erfindungsgemäß zusammengesetzte Stähle E1,E2,E3 erschmolzen worden, deren Zusammensetzung in Tabelle 1 angegeben ist.

Die Stähle E1,E2,E3 sind anschließend zu Brammen vergossen, jeweils auf eine Vorwärmtemperatur von 1250 °C erwärmt und bei einer Warmwalzendtemperatur von 950 °C zu jeweils einem 3 mm dicken Warmband warmgewalzt worden.

Das jeweils erhaltene Warmband ist bei einer Haspeltemperatur von 20 °C zu einem Coil gehaspelt worden.

Nach dem Haspeln sind die Warmbänder mit einem Kaltwalzgrad von jeweils 66 % zu Kaltband mit einer Dicke von 1 mm kaltgewalzt worden.

Die so erhaltenen Kaltbänder sind schließlich einer im kontinuierlichen Durchlauf durchgeführten Schlussglühung unterzogen worden, bei der sie über eine Dauer von 140 s auf 780 °C erwärmt worden sind.

Ebenfalls zum Vergleich sind in entsprechender Weise aus Vergleichsstählen V1 - V14 kaltgewalzte Stahlbleche hergestellt worden. Die Gehalte der neben Eisen wesentlichen Bestandteile dieser Vergleichsstähle V1 - V14 sind in Tabelle 3 angegeben.

Aus den so aus den erfindungsgemäßen Stählen E1 - E3 sowie den Vergleichsstählen V1 - V14 erhaltenen Kaltbändern sind Ronden geschnitten worden, aus denen dann Näpfchen tiefgezogen worden sind. Dazu sind die kreisrunden Blechronden zwischen einem ringförmigen Niederhalter und einer ebenso ringförmigen Matrize eingespannt worden. In der anschließend durchgeführten Tiefziehoperation ist die Blechronde mittels eines Stempels in die Ausnehmung der Matrize gezogen worden.

Die erhaltenen Näpfchen sind dann zur Ermittlung der "Näpfchenhaltezeit" in Gruppen ("Näpfchen-Kollektiven") von jeweils fünf Näpfchen in einer 5 % NaCl-Lösung gelagert worden. Während der Lagerzeit erfolgte laufend eine Kontrolle der Näpfchen auf Risse. Die jeweilige "Näpfchenhaltezeit" entspricht dann der Zeit, die vom Beginn der Lagerung in der NaCl-Lösung bis zum ersten Auftreten eines Risses bei einem der Näpfchen des jeweiligen Näpfchen-Kollektives vergangen ist. Die auf diese Weise ermittelte Näpfchenhaltezeit stellt ein Maß für den Widerstand gegen verzögerte Rissbildung dar. Je länger die Näpfchenhaltezeit ist, desto besser ist die Beständigkeit des jeweiligen Stahlmaterials, aus dem die Näpfchen gezogen worden sind, gegen die verzögerte Rissbildung.

Zusätzlich sind Schweißversuche durchgeführt worden, bei denen jeweils ein aus den Stählen E1 - E3 bzw. V1 - V14 gefertigtes Blech mit einem konventionellen niedrig legierten Stahl widerstandspunktgeschweißt worden ist. Dabei ist sowohl der jeweilige "Arbeitsbereich" A ermittelt als auch kontrolliert worden, ob Lotrisse in der Fügeebene zwischen den Stahlblechen entstanden sind.

Unter dem "Arbeitsbereich" A wird hier die Differenz zwischen der für die Erzeugung einer Schweißlinse benötigten Mindeststromstärke Imin und der maximalen Stromstärke Imax verstanden, bei deren Überschreiten die Gefahr besteht, dass Material des zu verschweißenden Substrats beim Schweißvorgang oberflächig wegspritzt (Arbeitsbereich A = Imax - Imin ). Ein solches Wegspritzen soll vermieden werden, da es zu schlechteren Schweißverbindungen führt. Je kleiner der Arbeitsbereich, desto genauer muss der Schweißprozess geführt werden. Je größer der Arbeitsbereich, desto einfacher und zuverlässiger lässt sich eine Schweißung unter den in der betrieblichen Praxis herrschenden Bedingungen herstellen. Um eine praxisgerechte Verarbeitung sicherzustellen, werden daher beispielsweise im Bereich der Automobilherstellung für Stahlmaterialien, die verschweißt werden sollen, Arbeitsbereiche A mindestens 0,8 kA gefordert.

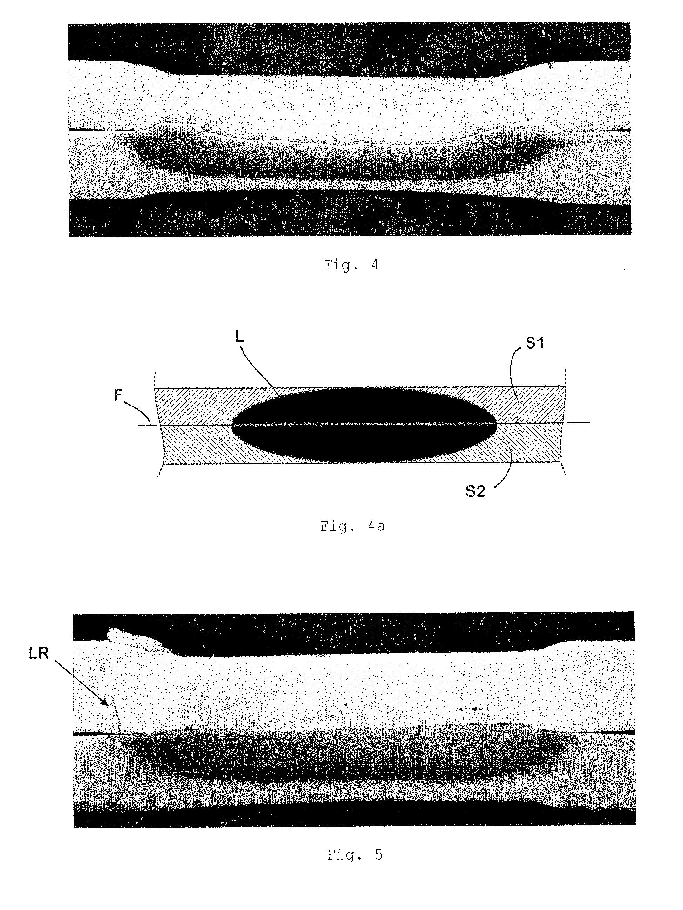

Die Fügeebene F zwischen zwei miteinander aufeinander liegend verschweißten Stahlblechen S1,S2 ist ein für eine Schweißverbindung besonders kritischer Bereich. In Fig. 4a ist schematisch eine Widerstandspunkt-Schweißverbindung gezeigt, bei der die beiden Stahlbleche S1,S2 durch eine Schweißlinse L verschweißt sind. Tritt in der auf diese Weise gebildeten Verbindungszone ausgehend von der Fügeebene F ein Riss auf, so wird die Festigkeit der Verbindung zwischen den Blechen S1,S2 erheblich gestört und die Tragfähigkeit einer solchen Schweißverbindung nimmt deutlich ab.

In Tabelle 2 sind die mechanischen Eigenschaften Dehngrenze Rp0,2, Zugfestigkeit Rm, Gleichmaßdehnung Ag und Bruchdehnung A sowie Art des Gefüges, Korngröße, Näpfchenhaltezeit, Arbeitsbereich und Risslänge in der Fügeebene für die aus den Stählen E1, E2, E3 erzeugten Stahlbleche angegeben.

In Tabelle 4 sind die Näpfchenhaltezeit, der Arbeitsbereich und die Risslänge in der Fügeebene für die aus den Vergleichsstählen V1 - V14 erzeugten Stahlbleche angegeben. Zu beachten ist dabei, dass die in Tabelle 4 angegebenen Messwerte nur erzielt worden sind, weil die Proben im Labor geschweißt wurden. Unter betrieblichen Bedingungen sind so ungünstige, eng begrenzte Arbeitsbedingungen, wie sie sich bei den Versuchen mit den aus den Vergleichsstählen V7, V10, V11 und V12 ergeben haben, nicht realisierbar. Aus den bereits erläuterten Gründen fordern die industriellen Verwender von Stahlflachprodukten der hier in Rede stehenden Art jeweils einen Arbeitsbereich A von mehr als 0,8 kA.

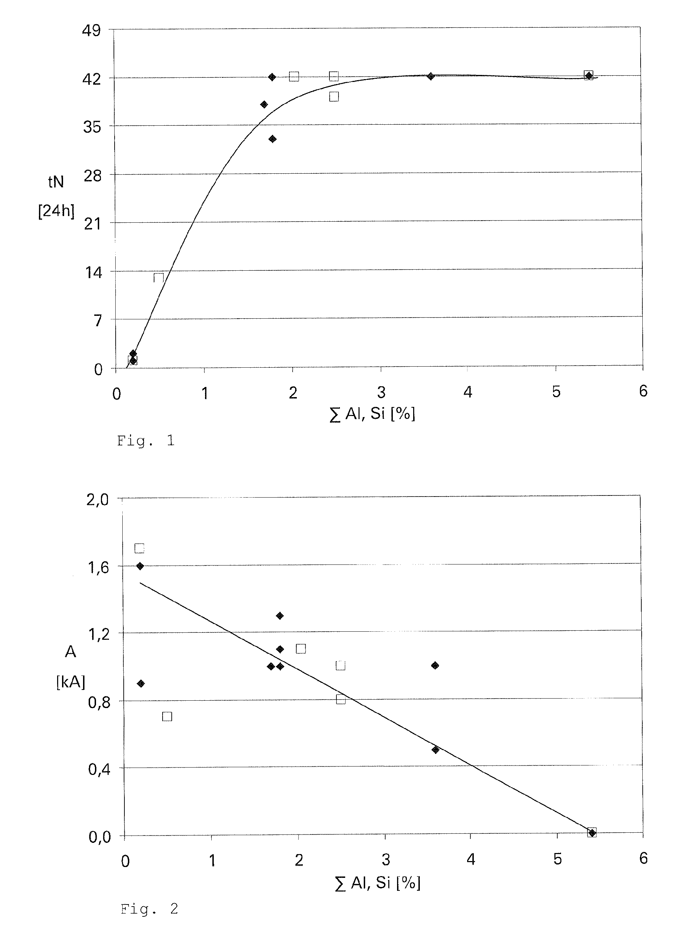

In Fig. 1 sind die für die in der voranstehend beschriebenen Weise erzeugten und getesteten Näpfchen ermittelten "Näpfchenhaltezeiten" tN (angegeben in Tagen (=24h)) über die Summe ΣAl, Si der Al- und Si-Gehalte aufgetragen. Die mit den aus den mikrolegierten Stählen E1 -E3, V2, V11, V12 und V14 bestehenden Näpfchen erzielten Näpfchenhaltezeiten tN sind durch leere Quadrate angezeigt, während die Näpfchenhaltezeiten, die für die aus den nicht mikrolegierten Stählen V1, V3 - V10 und V13 bestehenden Näpfchen ermittelt worden sind, durch gefüllte Rauten symbolisiert sind.

Es zeigt sich, dass mit steigendem Al- und Si-Gehalt auch die Näpfchenhaltezeit zunimmt. Um eine Näpfchenhaltezeit von mindestens zwei Wochen zu erreichen, ist demnach ein Gehalt von jeweils mindestens 0,6 % Al bzw. Si nötig. Bei hohen Gehalten versagen die Näpfchen im Beobachtungszeitraum von sechs Wochen nicht.

Die sich aus Fig. 1 ergebende maximale Näpfchenhaltezeit von 42 Tagen erklärt sich daraus, dass die berichteten Tests nur über einen Zeitraum von sechs Wochen durchgeführt worden sind. Tatsächlich war die Mehrzahl der aus den erfindungsgemäßen Stählen hergestellten, der NaCl-Lösung ausgesetzten Näpfchen am Ende der Testzeit vollständig intakt. Dies ist ein weiterer Beleg dafür, dass durch die erfindungsgemäße Legierung wirksam der Rissbildung vorgebeugt ist.

In Fig. 2 ist für die in der voranstehend beschriebenen Weise aus den Stählen E1 - E3 und V1 - V14 erzeugten Stahlblechen der Zusammenhang zwischen der Summe ΣAl, Si der Al- und Si-Gehalte und dem "Arbeitsbereich" A, angegeben in Kilo-Ampere kA, dargestellt. Die für die aus den mikrolegierten Stählen E1 -E3, V2, V11, V12 und V14 hergestellten Bleche ermittelten Arbeitsbereiche A sind dabei ebenfalls durch leere Quadrate gekennzeichnet, während die Arbeitsbereiche A, die für die aus den nicht mikrolegierten Stählen V1, V3 - V10 und V13 hergestellten Bleche erfasst worden sind, auch hier durch gefüllte Rauten markiert sind.

Der Arbeitsbereich A einer Widerstandspunktschweißung ist eine wichtige Kenngröße. Aus Fig. 2 geht klar hervor, dass sich mit steigendem Al- und Si-Gehalt der Schweißbereich verkleinert. Die erfindungsgemäße Beschränkung der Summe der Al- und Si-Gehalte auf maximal 2,5 Gew.-% stellt somit sicher, dass erfindungsgemäßes Stahlmaterial immer einen Arbeitsbereich A von mindestens 0,8 kA aufweist.

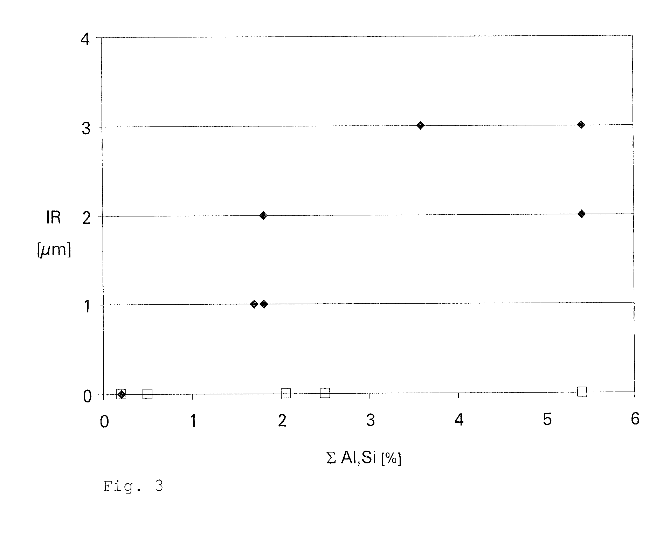

In Fig. 3 ist schließlich der Zusammenhang zwischen der Summe ΣAl, Si der Al- und Si-Gehalte und der in µm angegebenen Risslänge lR in der Fügeebene zwischen zwei in der voranstehend beschriebenen Weise miteinander verschweißten Stahlblechen eingetragen. Dabei sind auch hier die für die aus den mikrolegierten Stählen E1 - E3, V2, V11, V12 und V14 hergestellten Blechen erhaltenen Ergebnisse durch leere Quadrate und die für die aus den nicht mikrolegierten Stähle V1, V3 - V10 und V13 erzeugten Bleche ermittelten Werte durch gefüllte Rauten symbolisiert.

Fig. 3 belegt somit, dass bei den nicht in erfindungsgemäßer Weise mit Mikrolegierungselementen legierten Stählen mit steigendem Al- und Si-Gehalt auch die Risslänge steigt. Werden aber Mikrolegierungselemente zulegiert, so führen diese zu einem feinem Korn und verhindern so die Rissbildung in der Fügeebene zuverlässig.

In Fig. 4 ist deutlich das feine Gefüge des erfindungsgemäßen Stahlblechs mit seinen gleichmäßig verteilten feinen Körnern zu erkennen.

Dagegen ist die Körnigkeit bei dem in Fig. 5 dargestellten, aus nicht erfindungsgemäßem Stahl gefertigten Stahlbleche deutlich gröber mit der Folge, dass dort eine entsprechend deutlich erhöhte Neigung zur Rissbildung besteht, die sich in der Entstehung eines Lotrisses LR äußert.

Während die mittlere Korngröße bei aus den erfindungsgemäßen Stählen E1 - E3 erzeugten Stahlblechen jeweils bei ca. 5 µm² (entsprechend ASTM14 bis ASTM15) liegt, liegt sie bei den aus den konventionellen Vergleichsstählen V1 - V14 gefertigten Blechen im Bereich von 60 µm² (etwa ASTM 11).

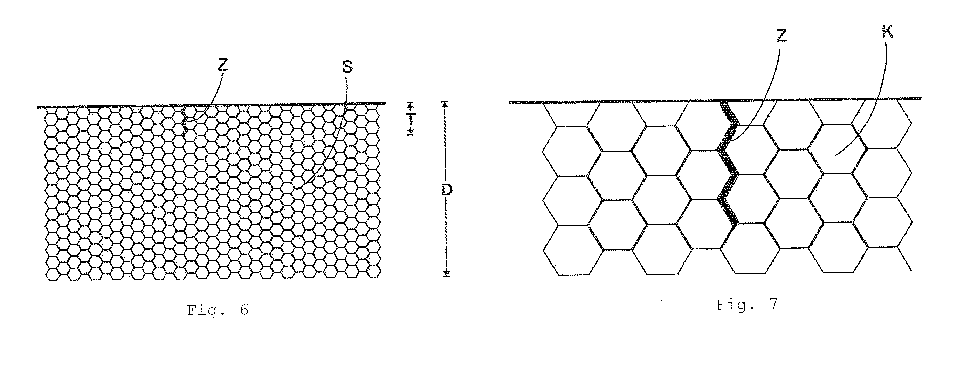

Wie in Fig. 6 schematisch dargestellt, bewirkt die Feinkörnigkeit des erfindungsgemäßen Stahlblechs S, dass von der Oberfläche des Stahlblechs S ausgehende Risse F über eine wesentlich geringere Tiefe T in das Stahlblech S eindringen können als bei dem konventionellen, deutlich gröberen Stahlblech K, für das ein Rissverlauf in Fig. 7 schematisch dargestellt ist. Einer Schädigung des erfindungsgemäßen Stahlblechs S durch Lotrissigkeit ist so wirksam vorgebeugt.

Durch die erfindungsgemäße Beschränkung der Summe der Al-und Si-Gehalte auf Werte kleiner 2,5 Gew.-% sowie die Hinzulegierung von V oder Nb sowie gegebenenfalls Ti als Mikrolegierungselemente wird somit ein Stahl erhalten, der nicht nur eine besonders geringe Neigung zur Lotrissbildung aufweist, sondern in Kombination damit auch hoch beständig gegen eine verzögerte Rissbildung ist.

**Tabelle 1 (Angaben in Gew.-%; Rest Eisen und unvermeidbare Verunreinigungen)**

| Stahl | C | Mn | Al | Si | ΣAl,Si | V | Nb | S | P | N | Mo | Cr | B | Ni | Cu |
|---|---|---|---|---|---|---|---|---|---|---|---|---|---|---|---|
| E1 | 0,41 | 18,8 | 1,40 | 0,65 | 2,05 | 0,12 | <0,001 | 0,005 | 0,004 | 0,003 | 0,012 | 0,028 | 0,001 | 0,020 | 0,012 |
| E2 | 0,40 | 18,6 | 1,50 | 0,98 | 2,48 | 0,12 | <0,001 | 0,005 | 0,003 | 0,0044 | 0,014 | 0,024 | 0,001 | 0,021 | 0,017 |
| E3 | 0,40 | 19,2 | 1,48 | 1,00 | 2,48 | <0,001 | 0,12 | 0,007 | 0,003 | 0,0037 | 0,014 | 0,026 | 0,001 | 0,025 | 0,016 |

**Tabelle 2**

| Stahl | Rp0,2 | Rp0,2 | Ag | A | Gefüge | Korngröße | Näpfchen- | Arbeitsbereich | Risslänge in |
|---|---|---|---|---|---|---|---|---|---|
| | [MPa] | [MPa] | [%] | [%] | | | Haltezeit [Tage] | [kA] | Fügeebene [µm] |
| E1 | 502 | 889 | 45 | 45 | Rein | 5 µm² | 42 | 1,1 | Keine Risse |
| | | | | | austenitisch | (ASTM 14-15) | | | |
| E2 | 526 | 917 | 43 | 49 | Rein | 5 µm² | 39 | 0,8 | Keine Risse |
| | | | | | austenitisch | (ASTM 14-15) | | | |
| E3 | 603 | 921 | 43 | 48 | Rein | 5 µm² | 42 | 1 | Keine Risse |
| | | | | | austenitisch | (ASTM 14-15) | | | |

**Tabelle 3 (Angaben in Gew.-%; Rest Eisen und unvermeidbare Verunreinigungen)**

| Stahl | C | Mn | Al | Si | ΣAl, Si | V |
|---|---|---|---|---|---|---|
| V1 | 0,6 | 22 | - | 0,2 | 0,2 | - |
| V2 | 0,6 | 22 | - | 0,2 | 0,2 | 0,2 |
| V3 | 0,3 | 20 | - | 0,2 | 0,2 | - |
| V4 | 0,6 | 22 | 1,5 | 0,2 | 1,7 | - |
| V5 | 0,05 | 25 | 0,9 | 0,9 | 1,8 | - |
| V6 | 0,05 | 25 | 1,8 | 1,8 | 3,6 | - |
| V7 | 0,05 | 25 | 2,7 | 2,7 | 5,4 | - |
| V8 | 0,6 | 22 | 0,9 | 0,9 | 1,8 | - |
| V9 | 0,6 | 22 | 1,8 | 1,8 | 3,6 | - |
| V10 | 0,6 | 22 | 2,7 | 2,7 | 5,4 | - |
| V11 | 0,05 | 25 | 2,7 | 2,7 | 5,4 | 0,2 |
| V12 | 0,6 | 22 | 2,7 | 2,7 | 5,4 | 0,2 |
| V13 | 0,6 | 18 | 1,6 | 0,2 | 1,8 | - |
| V14 | 0,9 | 17 | - | 0,5 | 0,5 | 0,3 |

**Tabelle 4**

| Stahl | Näpfchenhaltezeit [Tage] | Arbeitsbereich [kA] | Risslänge in Fügeebene [µm] |
|---|---|---|---|
| V1 | 1 | 1,6 | keine Risse |
| V2 | 1 | 1,7 | keine Risse |
| V3 | 2 | 0,9 | keine Risse |
| V4 | 38 | 1,0 | < 50 |
| V5 | 42 | 1,3 | < 50 |
| V6 | 42 | 1,0 | > 100 |
| V7 | 42 | < 0,1 | < 100 |
| V8 | 33 | 1,0 | < 100 |
| V9 | 42 | 0,5 | > 100 |
| V10 | 42 | < 0,1 | > 100 |
| V11 | 42 | < 0,1 | keine Risse |
| V12 | 42 | < 0,1 | keine Risse |
| V13 | 42 | 1,1 | < 50 |
| V14 | 13 | 0,7 | keine Risse |

## Patentansprüche

1. Höherfester, kaltumformbarer Stahl mit (in Gew.-%)
- mindestens 0,1 % % und höchstens 1,0 % Kohlenstoff,
- mindestens 10 % und höchstens 30 % Mangan,
- mehr als 0,60 %, jedoch weniger als 1,8 % Aluminium,
- mehr als 0,60 %, jedoch weniger als 1,8 % % Silizium,
- wobei die Summe der Gehalte an Aluminium und Silizium höchstens 2,5 % beträgt,
- mindestens ein Mikrolegierungselement aus der Gruppe "Vanadium, Niob", wobei die Summe der Gehalte an diesen Mikrolegierungselementen mindestens 0,05 % und höchstens 0,5 % beträgt,
- weniger als 0,5 % Titan,
- weniger als 0,03 % Schwefel,
- weniger als 0,08 % Phosphor,
- weniger als 0,1 % Stickstoff,
- weniger als 2 % Molybdän,
- weniger als 8 % Chrom,
- weniger als 0,01 % Bor,
- weniger als 8 % Nickel,
- weniger als 5 % Kupfer
- und als Rest Eisen und unvermeidbare, herstellungsbedingte Verunreinigungen.

2. Stahl nach Anspruch 1, **dadurch gekennzeichnet, dass** die Summe seiner Al- und Si-Gehalte 1,8 - 2,5 Gew.-% beträgt.

3. Stahl nach einem der voranstehenden Ansprüche,
**dadurch gekennzeichnet, dass** sein C-Gehalt 0,1 - 0,6 Gew.-% beträgt.

4. Stahl nach einem der voranstehenden Ansprüche,
**dadurch gekennzeichnet, dass** sein Mn-Gehalt 15 - 26 Gew.-% beträgt.

5. Stahl nach einem der voranstehenden Ansprüche,
**dadurch gekennzeichnet, dass** sein Stickstoff-Gehalt 0,0030 - 0,0080 Gew.-% beträgt.

6. Stahl nach einem der voranstehenden Ansprüche,
**dadurch gekennzeichnet, dass** die Summe seiner Gehalte an Nb und V 0,1 - 0,3 Gew.-% beträgt.

7. Stahl nach einem der voranstehenden Ansprüche,
**dadurch gekennzeichnet, dass** seine Zugfestigkeit mindestens 800 MPa beträgt.

8. Stahlflachprodukt hergestellt aus einem gemäß einem der Ansprüche 1 bis 7 beschaffenen Stahl.

9. Stahlflachprodukt nach Anspruch 8, **dadurch gekennzeichnet, dass** es zum Schutz vor Korrosion mit einer metallischen Schutzbeschichtung beschichtet ist.

10. Stahlflachprodukt nach Anspruch 9, **dadurch gekennzeichnet, dass** die metallische Schutzbeschichtung durch elektrolytisches Verzinken, Feuerverzinken oder durch Feueraluminieren gebildet ist.

11. Stahlflachprodukt nach einem der Ansprüche 8 bis 10, **dadurch gekennzeichnet, dass** es ein Gefüge besitzt, das feiner oder gleich ASTM 10, insbesondere feiner oder gleich ASTM 12 ist.

12. Verfahren zur Herstellung eines gemäß einem der Ansprüche 8 bis 11 beschaffenen höherfesten Stahlfachproduktes,
- bei dem ein Vormaterial in Form von Brammen oder Dünnbrammen aus einem gemäß einem der Ansprüche 1 bis 7 beschaffenen Stahl gegossen wird,
- bei dem das gegossene Vormaterial auf eine Vorwärmtemperatur ≥ 1100 °C erwärmt oder mit einer solchen Temperatur direkt eingesetzt wird,
- bei dem das vorgewärmte Vormaterial zu Warmband bei einer mindestens 800 °C betragenden Warmwalzendtemperatur warmgewalzt wird,
und
- bei dem das fertiggewalzte Warmband bei einer maximal 700 °C betragenden Haspeltemperatur gehaspelt wird.

13. Verfahren nach Anspruch 12, **dadurch gekennzeichnet, dass** das Warmband bei Raumtemperatur gehaspelt wird.

14. Verfahren nach Anspruch 12 oder 13, **dadurch gekennzeichnet, dass** das Warmband nach dem Haspeln zu Kaltband kaltgewalzt wird.

15. Verfahren nach Anspruch 14, **dadurch gekennzeichnet, dass** das Kaltband einer Glühung bei einer maximal 800 °C betragenden Glühtemperatur unterzogen wird.

16. Verfahren nach einem der Ansprüche 12 bis 15,
**dadurch gekennzeichnet, dass** das erhaltene Stahlband mit einer vor Korrosion schützenden metallischen Schutzschicht überzogen wird.

17. Verwendung eines gemäß einem der Ansprüche 8 bis 11 beschaffenen Stahlflachprodukts zur Herstellung von tragenden oder crashrelevanten Karosseriebauteilen.
